# EUROPEAN PATENT APPLICATION

(11) **EP 1 326 182 A2**
(43) Date of publication of application: **09.07.2003**
(21) Application number: 02102647.1
(22) Date of filing: 26.11.2002
(51) Int. Cl.: G06F 17/30

(54) **Knowledge system**

(30) Priority: 28.11.2001 GB 1208457
(71) Applicant: Symbio IP Limited, Reading RG1 4BA (GB)
(72) Inventor: Francis, Gillian, E., Reading, Berkshire RG4 9HG (GB); Byford, Peter, John, Winchester, Berkshire SO22 5HQ (GB)
(74) Representative: Lind, Robert

(57) **Abstract**

A method of assembling a knowledge database containing question and answer pairs, the method comprising the steps of: extracting questions from a multiplicity of electronic communications; enabling the sender of the communication to examine and select or deselect the extracted question(s); classifying each question based upon the content of the question and identifying keywords in each question; entering the questions into the database together with their respective classifications and keywords; and entering into the database answers corresponding to the entered questions; wherein an answer to a question may be found by classifying the question and identifying keywords therein, identifying questions contained in the database which have the same or a similar classification and which contain some or all of the same keywords, and identifying the corresponding answers

## Description

The present invention relates to a system for capturing, processing and storing information and for building a knowledge database containing the knowledge of an organisation or individual in a readily accessible form.

Many companies, and in particular biotechnology and small pharmaceutical companies, are vulnerable to the loss of information which occurs with the loss of expert employees. Experts build up a large store of knowledge over time, and when they leave a company that knowledge leaves with them.

Much of the knowledge base of a company often lies within the experience of a few key individuals. In addition, in multi-disciplinary enterprises such as biotechnology, no single individual has all the expertise that the company needs.

Furthermore, as a company expands, there is a difficulty in training new recruits at a sufficient rate to prevent unnecessary repetition of earlier research caused by ignorance of known problems to which solutions have already been found. Technology transfer is a difficult process and fully documented, formal technology transfer is usually restricted to a few key areas such as critical manufacturing procedures.

Knowledge can be stored on databases, and indeed many database systems exist, but data entry is typically a laborious, time consuming and expensive process. Furthermore, efficient database design is complex and beyond the scope of many small companies.

Many individuals store and archive internal and external emails, memos and paper based records, but these are of only limited use in encapsulating even that individual's knowledge base and are entirely inadequate to capture that of a whole company. Furthermore, information stored in such archives is very difficult to access, particularly for anyone apart from the individual who created the archive in the first place.

Consultants and service companies dispensing scientific, technical, business, or financial advice are particularly vulnerable to the loss of individual experts. In addition, the advice dispensed by such companies is frequently repetitive. Such companies can improve their efficiency if an expert does not need to be consulted every time the same question is repeated. Storage of a database of Frequently Asked Questions (FAQs) is a common way of attempting to provide answers to repeated questions. However, FAQ databases are very tedious to update. They often function well when first implemented and then fall into disuse as they become out of date. In addition, retrieving appropriate information from such databases can be difficult.

There is therefore a need for a system which allows knowledge to be captured and then stored in a database in such a way that it can be continuously expanded and easily accessed, without the burden of retrieval of a large amount of irrelevant information at the same time. There is a further need for storing the knowledge of individuals so that it can be easily accessed by others. It is desirable from the point of view of consultants and others who charge for dispensing information to be able to obtain repeat income from the provision of a single piece of advice or information.

In accordance with a first aspect of the present invention there is provided a method of assembling a knowledge database containing data sets, the method comprising the steps of:
extracting data blocks from a multiplicity of electronic communications originating from client terminals, using a set of predefined rules;
for each said communication, displaying the extracted data block(s) on a display of the originating client terminal and enabling the sender of the communication to select or deselect a data block using input means of the client terminal:
   classifying each selected data block based upon the content of the data block:
      entering the data blocks into the database together with their respective classifications; and
      receiving associated data blocks corresponding to the entered data blocks, from client computer terminals belonging to recipients of the electronic communications, and entering the associated data blocks into the database,
wherein a partner for a data block may be found by classifying the data block, identifying data blocks contained in the database which have the same or a similar classification, and identifying the corresponding associated data blocks of the same set.

Preferably, the first mentioned data blocks represent questions, and said associated data blocks are answers to respective questions.

Preferably, the method comprises identifying keywords in the or each question. Any identified keywords may optionally be entered into the database together with respective questions. An answer to a question is found by classifying the question and identifying keywords therein, and identifying questions contained in the database which have the same or a similar classification and which contain some or all of the same keywords.

In a preferred embodiment, a sender is able to add context to the extracted question, and the keyword identification is carried out using the question and context sentence or sentences.

The questions may preferably be classified based upon an analysis of the words and phrases used in the questions and of their relative positions within the question sentence. The step of classifying the question may also preferably comprise identifying functionally synonymous words and phrases in the question and may, in addition, comprise the step of checking the synonymous words and phrases against a look up table containing them singly or in combinations.

The term "synonymous questions" refers to differently phrased questions which are qualitatively the same question and can thus be answered by the same answer.

The electronic communication may be an email, an intranet memo, text message, or some other electronic message. It might also be the output of a speech recognition system into which the user has spoken a question.

In a preferred embodiment, the expert inserts the answer to a question directly into the entry in the database containing that question. The expert may access the entry in the database by activating a clickable link, e.g. a document link (doc-link according to Lotus Notes™ or a hyperlink in a web browser or Outlook™ environment), in the modified electronic communication.

The knowledge of each company comprises a mixture of confidential and non-confidential information. There is also some information which only needs to be kept confidential from competing companies. Groups of companies could have considerable efficiency benefits if they were able to share information. Accordingly, the method may comprise an additional step of adding to each question and answer pair an access code which defines who can access the question and answer pair via the database.

Preferably, the step of extracting questions from electronic communications is carried out at client terminals coupled to a communications network, whilst said database is stored at a central server also coupled to the network. This distributed architecture allows the method to handle a large number of "routine" communications including emails, quickly building up a large knowledge base. The client terminals may be computer terminals, handheld devices, suitably enabled phones, etc. The communications network may be a fixed line network, a wireless network (e.g. cellular or satellite), or any other suitable network.

According to a second aspect of the present invention there is provided a method of assembling a knowledge database containing question and answer pairs, the method comprising the steps of:
extracting questions from a multiplicity of electronic communications originating from client terminals;
for each said communication, displaying the extracted question(s) on a display of the originating client terminal and enabling the sender of the communication to select or deselect a question(s) using input means of the client terminal:
   classifying each selected question based upon the content of the question:
      entering the questions into the database together with their respective classifications; and
      receiving answers corresponding to the entered questions from client computer terminals belonging to recipients of the electronic communications, and entering the answers into the database,
wherein an answer to a question may be found by classifying the question, identifying questions contained in the database which have the same or a similar classification, and identifying the corresponding answers.

Seeking expert advice can be costly. The process is particularly wasteful where individuals within the same company ask experts the same questions (so that the company pays for the same advice more than once). Answering the same question more than once is also unnecessary repetition for an expert.

Thus, in accordance with a third aspect of the present invention there is provided a method of delivering information to a user from a knowledge database constructed according to the above method, the method comprising:
searching an electronic communication prepared by the user for questions:
   searching the database for matching and/or similar questions;
   providing identified matching and/or similar questions to the user together with links to the respective answers stored in the database.

In accordance with a fourth aspect of the present invention there is provided a method of building a knowledge database comprising question and answer pairs, the method comprising:
extracting questions from electronic communications;
comparing the extracted questions with questions in the database;
if the extracted questions do not have a functional match to any of the questions in the database, adding the questions to the database and forwarding them to the recipient of the electronic communication for him to answer; and
if the recipient of the electronic communication provides an answer to any of the questions added to the database, adding the answer to the database.

Knowledge management is relatively costly and obtaining advice on a broad range of topics can involve contracts with multiple experts. Thus there is a need for system linking expert service provides to users and for supplying shared knowledge management facilities.

Thus in accordance with a fifth aspect of the present invention there is provided a method of operating a knowledge base, the knowledge base comprising a database containing question and answer pairs and being coupled to a communications network to which users and experts are also coupled, the method comprising:
extracting questions from electronic communications created by users;
determining whether or not answers to the extracted questions are present in the database;
if answers are present in the database, delivering the answers to the users and rewarding the providers of the answers; and
sending the corresponding electronic communications to respective experts to provide answers, and adding these questions and answers to the database.

Preferably the method also comprises allocating one of a set of access codes to each question and answer pair, an access code defining the accessibility of a question and answer pair to users.

The method may also comprise entering into the database charging information for experts providing answers, wherein an expert is rewarded based upon the charging information for that expert and the number of times answers provided by the expert are accessed by users.

In addition to individual answers to questions provided by experts, reports and other documents provide answers to a multiplicity of different questions. However some large reports are extremely expensive making them uneconomic as a source of an answer to an individual question or just a few questions. A means to give a user less expensive access to the report and at the same time to motivate the producer of the report to allow this, is therefore desirable.

Thus, in accordance with a sixth aspect of the present invention there is provided a method of providing information from reports and other documents comprising the steps of:
identifying sections of the report which answer specific questions;
entering those questions and the corresponding sections of the report into a database;
enabling a user to enter a question;
matching the question to a functionally synonymous question in database; and
presenting the relevant section of the report which contains the corresponding answer to the user.

Preferably, the provider of the report or document is rewarded based upon the number of times users access sections of the report.

Some preferred embodiments of the invention will now be described by way of example only and with reference to the accompanying drawings, in which:
Figure 1 is a schematic diagram showing routing of information between the sender of an email, the recipient of that email and a server;
Figure 2 shows a sample email containing three questions;
Figure 3 shows the question detection and selection screen in which two questions have been selected for processing;
Figure 4 shows the screen of Figure 3 following the addition of context to one of the questions;
Figure 5 shows a report screen showing similar questions found;
Figure 6 shows a secondary screen showing a question and corresponding answer;
Figure 7 shows a screen for adding a question to the database;
Figure 8 shows a dialogue box for previewing links attached to the email;
Figure 9 shows a preview of the email with attached clickable links to the database;
Figure 10 is a further example of a report screen for similar questions;
Figure 11 is a further example of a report screen for similar questions;
Figure 12 is a further example of a report screen for similar questions;
Figure 13 is a further example of a report screen for similar questions; and
Figure 14 is a schematic diagram showing possible users of the present invention.

There are many scenarios in which it is desirable to be able to map a given piece of information (a "data block") to some associated piece or pieces of information in a fast and efficient manner. This same mapping may have been performed many times in the past, and it is desirable to be able to make use of those past results in order to avoid having to perform a detailed analysis yet again. For example, one can consider a question presented in textual form and to which a person wishes to obtain an answer. The answer to the same question may have been obtained in the past by the same person who is now asking the question, or perhaps by some other person. If the question is formulated as part of an electronic document, e.g. an email, at a client terminal (coupled to the Internet), the solution discussed below is appropriate. Of course, analogous solutions may be applied to map data blocks representing information other than questions and answers. For example, the solution may be used to map image portions contained in a large image to detailed textual information.

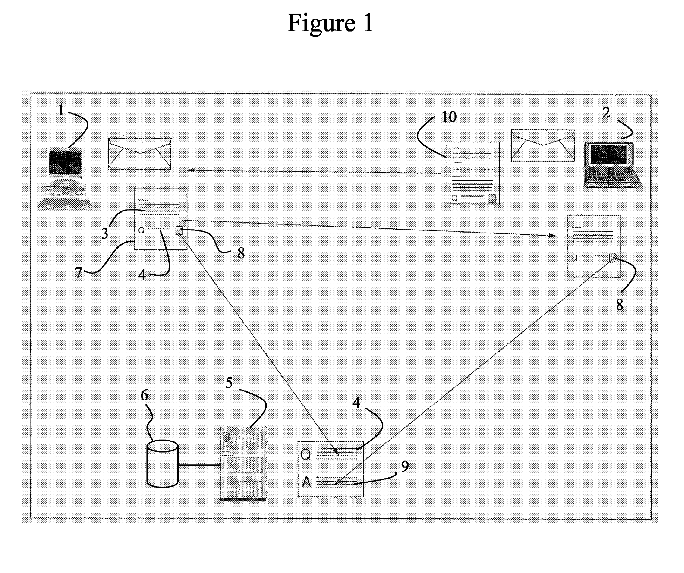

Figure 1 is a schematic diagram showing the routing of information when an individual 1 wishes to obtain information. The sender 1 composes an email to send to the recipient 2, the email 3 containing questions. The sender either uses an email client which has been modified so as to extract question(s) 4 from the email 3 or uses a browser type interface to extract questions. These questions are transmitted, preferably via the Internet or other network, to a server 5 which includes a database 6. If the user requests it, the question(s) 4 are then compared to questions stored on the database 6.

The database 6 is searched for question and answer pairs where the questions are functionally the same as question(s) 4. If a functional match is found between the question 4 and one or more stored questions, these stored question and answer pairs are presented to sender 1 via the network . The questions are presented in order with the best matching items at the top. The user then selects the closest matches (or as many questions as she wishes) and can also view their corresponding answers.

So if the sender's question has already been answered by the recipient (or by somebody else), it should already be in the database, and will be found before the email is sent to the recipient. This allows the answers to such questions to be found without the recipient needing to reply each time. If an answer was satisfactory the sender will either delete their own corresponding question or if all questions are answered may abandon the email all together.

If a satisfactory answer is not found or if the user wants confirmation on an answer, the user 1 selects the 'Add Question to Database' option and then question (or questions) 4 is (are) added to database 6. The question(s) 4 is (are) also added beneath the main text of the email as a question summary 7, and a clickable link 8 (e.g. a hyperlink or document link) is added to the email for each question, linking a question in the question summary 7 to the corresponding question which has just been stored in the database 6. The clickable link can be "clicked on" by a user to access the database 6 on the server 5 via the Internet, and will take the user directly to the corresponding question in the database 6.

The email 3 is then sent from the sender, together with the new question summary 7 and clickable link 8, to the recipient 2. The recipient 2 'clicks on' the clickable link 8 to access database 6 and to enter the answer in the field provided 9. In order for the answer to reach the original sender 1, the recipient can email a "reply with history" 10, which will contain the original document link 8 to the question 4 and answer 9 pair in the database 6, back to the sender 1.

Optionally, a batch process periodically scans the database for recently added answers and, if any are found, the original sender and any cc'd recipients are informed that an answer is now in the database (which they can access via the clickable link). Thus if the recipient 2 merely enters the answer via the link 8 without replying to the email, the questioner will still be alerted to the presence of the answer shortly after it is entered into the database.

The above process will now be described in more detail.

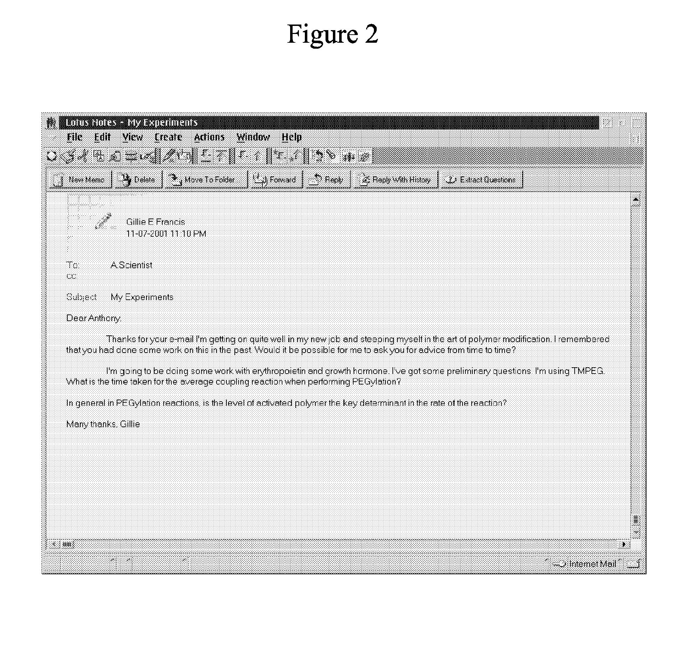

Figure 2 shows a typical draft email containing three questions. The email is illustrated using a Lotus Notes™ email client running with appropriate modifications, but it will be appreciated that the invention may be embodied in a similar fashion on any email client or via a browser or custom interface. The email client itself can be modified to provide the necessary options. Alternatively, a component can be installed to interact with the client and the user. The client offers two options: manual extraction of questions or automatic extraction which responds whenever the 'send' (or 'save as draft') command is issued by the user to transmit an email containing a question. In the example shown, the questions are:
- "Would it be possible to ask you for advice from time to time?"
- "What is the time taken for the average coupling reaction when performing PEGylation?"
- "In general, in PEGylation reactions, is the level of activated polymer the key determinant in the rate of reaction?"

In order to extract questions from the text of an email (or memo, or report), the modified client or added component searches for question marks and "captures" the preceding text of the question sentence (going back as far as the previous full stop or question mark).

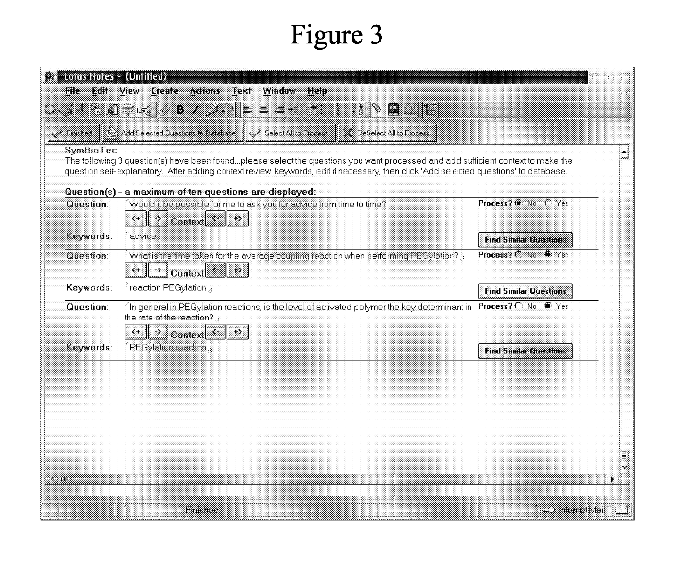

Figure 3 shows the result of activating question extraction. The screen has an explanatory field followed by the questions extracted. Not all questions will necessarily be of interest to third parties, so the program enables the sender to select important questions for further processing. In this example, the first question is simply of personal interest so the second and third questions only are selected.

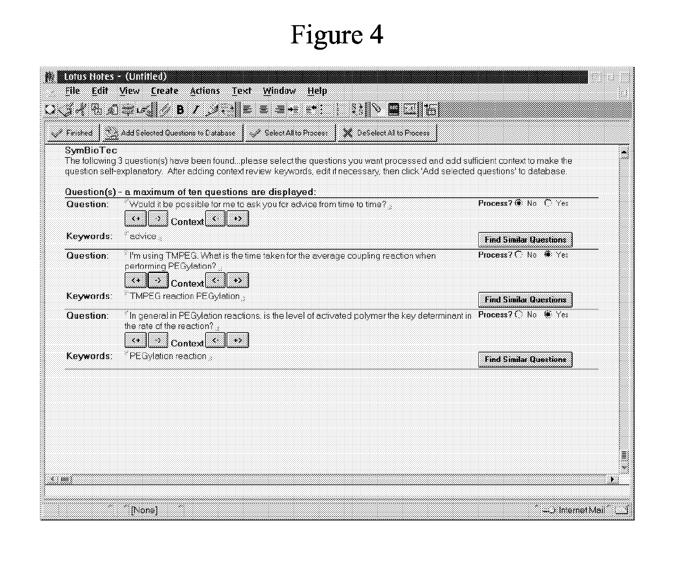

It will be noted that the extraction of questions as shown by Figure 2 provides only one sentence ending in a question mark per question. In some cases this may not provide all the information pertinent to construction of the answer or relevant for someone other than the questioner to understand the context in which the answer was given. The sender therefore has the opportunity to add "context" by clicking on the buttons marked <+ and >+ located beneath each question. The result of clicking the <+ button below the second question is shown in Figure 4. The answer to the second question depends on the type of PEG referred to, so the sender adds the sentence "I'm using TMPEG." which preceded the question sentence itself in the original email. Keywords are extracted from both the question sentence and any context sentences added by the user. The user may also type in to either the question field or context field corrections or additional material which is not in the original email for the purpose of making the database entry intelligible in isolation. In addition, where context in the original email is relevant, but not in sentences adjacent to the question sentence, a facility is provided to cut and past context from the body of the email into the context field.

The question extractor then assigns a question code to each question sentence. The sorting system comprises a series of steps and rules which allows any question to be allocated to one of a relatively large number of question types. In the preferred embodiment a maximum of thirty six question types are used. A unique question code is allocated to identify each question type. In total the number of possible combinations of words and phrases which comprise these thirty six question types represent over 90,000 word/phrase combinations.

Keywords are extracted from the question sentence and any context sentences added by the user. In Figure 3 note that in both the two lower questions the significant words extracted as keywords are "PEGylation" and "reaction" and that when context is added in Figure 4 the additional keyword "TMPEG" is added to the second question. Limiting the keywords is performed by an algorithm inspecting the question sentence and any context question sentences. This is designed to reduce the number of matches between sentences by not including commonly used words. It is an optional facet that the excluded and included word sets are customised for an industry area, or indeed an individual company. An example of the latter would be to exclude people's names (which will be relatively frequent in Company emails) from being automatically added as keywords. It is a further optional embodiment that the programme runs a spelling checker before processing to prevent misspelled words being added as keywords. The keyword field can also be edited by the sender with the removal or addition of keywords. However the presence of the keyword assigning algorithm usually avoids the need for user intervention and thus protects the database from inappropriate choices at the point of data entry. This feature makes the system more robust for busy users. Any question containing only common words has insufficient context and so context must be added, or else keywords added manually.

The next stage is to determine whether other, functionally synonymous questions have already been asked, and answers provided, at some stage in the past. To access this facility the user 'clicks' the 'Find Similar Questions' button. Server 5 is then accessed via a secure Internet connection or similar and the database 6 is consulted. The server 5 runs a search engine which searches the questions in database 6 for those having similar question codes and the question and answer pairs for those having similar keywords to find pairs where the combined question codes and keywords exactly or partially match the codes and keywords of the question being asked by user 1.

To allocate a question subset (and hence assign a question code), the word content of the question is analysed and manipulated as follows:
1) Functionally synonymous phrases (located in a phrase look up table) are found and substituted for a corresponding "primary phrase" which has a delimiter on each side (for example { and }) which can be used to prevent further processing of words in the primary phrase. In the second question of the example in Figure 4 above no phrases in this group were found (for a further example where such a phrase is present, see below)
2) The remainder of the sentence is processed to find and substitute a second group of functionally synonymous phrases, also located in the phrase look-up table, but processed second because they may contain parts which would cause substitution confusion with the first group of phrases mentioned in 1 above. These phrases are also substituted for a corresponding primary phrase bounded by a delimiter which prevents further processing. In the second question of the example in Figure 4, "what is" is replaced by the primary phrase code {phrase-22}.
3) The remainder of the sentence is examined for words which are frequently used in questions and these words (located in a word look-up table) are substituted for a corresponding primary word bounded by delimiters to prevent further processing. In the second question of the example in Figure 4 the words "time" and "when" are substituted. Both belong to the same group and are substituted by the word code {word-20}.
4) The distance (in terms of the number of intervening words) between the substituted parts (i.e. substituted words and/or phrases) is counted. In the second question of the example in Figure 4 there is one word "the" between {phrase-22} and the first {word-20} and 8 words between {phrase-22} and the next {word-20}. For questions with more than two substituted parts, the closest pair of parts is used to return the distance score for that question element (defined below).
5) The substituted words and phrases are checked versus a table which assigns unique codes and which contains "question elements" - primary words and phrases in various combinations. For example {wordₐ} {phrase_{b}} denotes a particular subset of words juxtaposed to a particular subset of phrases with no intervening words or phrases in the original sentence. However {wordₐ}+{phrase_{b}} means that the word and phrase have one or more intervening words. The software optionally sets an upper limit for the "x" the number of intervening words in order for the {wordₐ}+{phrase_{b}} to be considered as a question element. Question elements may contain mixed combinations of primary words and phrases, mixtures of phrases, mixtures of words, a single primary phrase, or one primary word. Only permitted elements appear on the table and hence only permitted elements are associated with a question code.
   Since any question going through the above process may contain several parts ,i.e. {primary words} and/or {primary phrases} and combinations of these substituted parts, the following rule base for assigning question code priorities is used. Question elements with more parts take precedence over those with fewer parts; phrases take precedence over words; if two elements are equal after applying the first two rules, the element with the shortest distance between the two parts takes precedence; if two elements are equal after applying the first three rules, the one nearest the beginning of the sentence takes precedence. Optionally, the last two rules can be applied in reverse order.
   This can be illustrated as follows with the items on the list ranked with the highest precedence at the top and lowest at the bottom:-
   {phrase} {phrase}ₙ
   {phrase} + {phrase}ₙ
   {phrase}++{phrase}ₙ
   {phrase} {word}ₙ
   {phrase} + {word}ₙ
   {phrase} ++ {word}ₙ
   {phrase}
   {word} {word}ₙ
   {word} + {word}ₙ
   {word} ++ {word}n
   {word}

   Where "n" is an integer 1 or greater and + and ++ represents a small or large gap between words. The higher the value of "n" the greater the priority (i.e. 3 phrases in a take precedence over 2 phrases).
   In the second question of the example in Figure 4 the prioritisation of the elements is as follows (highest priority at the top and lowest at the bottom):-
   {phrase-22}+{word-20} with a single word intervening:
   {phrase-22}++{word-20} with 8 words intervening (not important since {word-20} is identical)
   {word-20}+{word-20}
   {phrase-22}
   {word-20}
   On the basis of this prioritisation rule, the question code returned is code-JC and not for example what it would have been if {phrase-22} had appeared without {word-20} (code-DC).
   Optionally, to cope with certain rare situations where assignments do not follow this general rule, the software additionally applies a lookup table giving priorities between unique codes for any particular combination of element.
6) The keyword identification process operates on the original full sentence (i.e. without code word and phrase substitutions), plus any context sentence or sentences added by the user. The words in the question and the context are compared with an "ignore words" list which contains common words which are not useful if included as keywords (e.g. words like "a" and "the" which have no information content with respect to the subject matter of a question). The ignore word list is optionally tuned for a specific business area (such as the pharmaceuticals and biotechnology sectors) to exclude frequently used vocabulary which is not useful to discriminate question meaning, for example the word "microliters" appears frequently in scientific documents, but conveys little about the subject matter of a sentence. Any residual words (i.e. excluding those on the "ignore words" list) are returned as keywords. As shown in Figures 3 and 4 the user is asked to review and edit if necessary the keywords. Optionally there is also a facility to link words together (for example in the third question of Figure 4, the user might link rate_of_reaction) so that phrases containing words on the ignore list, in this example "rate" and "of" are included in the keyword field and used for matching purposes. This forces the matching system to ignore separate instances of the words and only return a match when the phrase is found.
   When a question also has an appended answer, that too is optionally used as a target for matching keywords.
7) The questions are ranked so that those with the highest probability of being functionally synonymous appear at the top of the list and those less likely appear below:-
   Same question code + same keywords = highest match
   Same question code + partial match on keywords = next highest match
   Similar question subset + same keywords
   Similar question subset + partial match on keywords

   Keyword only matches are reported below this in order depending on the degree of matching between the keywords in the original question and the keywords in the question, context and, optionally, answer, of the question and answer pairs in the database.

Questions where neither the question code nor the keywords match are rejected.

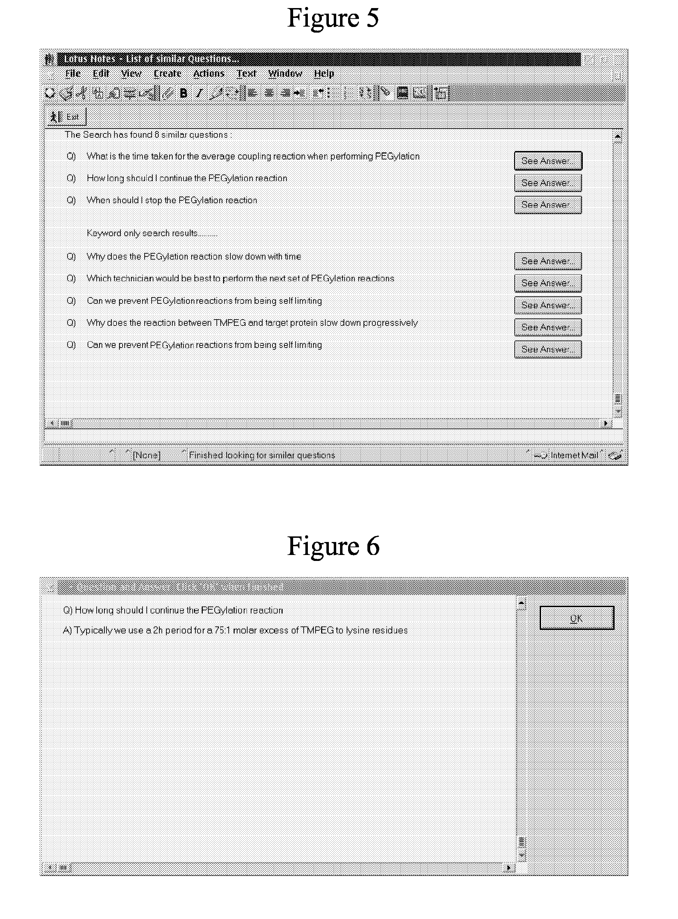

In the example shown in Figure 5 (which is the result of "clicking" the "Find Similar Questions" button beside question 2 of Figure 4), the top three questions all have similar question codes and two identical keywords "PEGylation" and "reaction". Note that the question sorting engine has successfully identified not only the exactly matching first question (which for the purposes of illustration was already in the database), but also two qualitatively similar questions with very different phrasing. The second and third questions have a high probability of having the answer to the first question. However the lower set of questions which do not have the same or similar question code, but which do have one or more of the three keywords for question 2 in Figure 4, are correctly identified as not being functionally synonymous questions. They are, however, made accessible to the user since they may be of general interest. For example the penultimate question, "Why does the reaction between TMPEG and target protein slow down progressively?" may well be relevant to the user asking question 2 of Figure 4.

It should be noted that the keyword matching system can optionally use "stem words" so that words with similar stems are matched. This copes with, for example, singular and plural versions of the same word. In this example "reaction" and "reactions" would be matched. In addition to the stem word facility, the keyword matching system optionally uses a synonym or thesaurus function which matches synonyms of keywords (i.e. different words which have the same meaning). In the example below, the synonym matching function could match "consultant" with "advisor".

The process described above can be illustrated with reference to another question:-
(a) [Question as entered] *Could you please recommend a consultant for our regulatory work on PEGylated GM-CSF?*
(b) [First phrase substitution] Two phrases are found and substituted "Could you" and "for our" so the question sentence becomes: *{phrase-5} please recommend a consultant {phrase-10} regulatory work on PEGylated GM-CSF?*
(c) [Second phrase substitution] No phrases from this list found, therefore no substitutions and sentence remains: *{phrase-5} please recommend a consultant {phrase-10} regulatory work on PEGylated GM-CSF?*
(d) [Word substitution] Two words, "recommend" and "consultant" are found on the word synonym table and substituted as follows: *{phrase-5} please {word-16} a {word-17} {phrase-10} regulatory work on PEGylated GM-CSF?*
(e) [Look up question codes] The following codes are returned:-
   {phrase-5}+{word-17} = Code-BB
   {phrase-5} = Code-AB
   {word-16} = Code-KC
   {word-17} = Code-BC
   Code-BB has the highest prioritisation due to its formation from {phrase}+{word}, and there are no priorities outside this rule on the question code look up table, thus code-BB is assigned.
(f) [Identify keywords] The underlined words in the original sentence have been found on the "Ignore words" list. *Could you please recommend a consultant for our regulatory work on PEGylated GM-CSF?* Thus the following four words are selected as keywords: "consultant", "regulatory", "PEGylated" and "GM-CSF".
(g) [Find similar questions] This process returns first any Code-BB questions with all four keywords, then Code-BB questions with three, two or one keyword matches. Optionally the engine can be tuned to a certain threshold level (e.g. 50% of keywords). Optionally the engine can also be tuned to return questions with the selected proportion of keywords and a close match to Code-BB.

It will be appreciated that the efficiency can be further improved in a number of ways. For example, a spell checker may be run over the questions before the question code and keyword searches are performed. Although it is possible for the keyword field to be edited by the sender of the email with the removal or addition of keywords, it is desirable that this should not usually be necessary and that the process of keyword generation should usually occur without intervention. The combination of the automatically assigned keyword(s) and question code will usually be sufficient to identify functionally similar questions.

Turning again to Figure 5, once similar questions from the database have been identified the results are displayed by the program, with the best match first. Figure 5 shows the results for the second question of Figure 4. The question sorting algorithm has successfully identified the qualitative similarities between the top three questions, whereas searching by keywords only (in line with the processes used by many prior art search engines) yields more questions which are very loosely related to the primary question and therefore unlikely to lead to the desired answer.

The sender can then select a question to see the answer linked to that question in the database. The result of doing this for the second question of Figure 5 is shown in Figure 6. Both the answer and the question which solicited this answer are shown in this response view.

The ability to find answers before sending the email gives the writer the option to save the recipient's time by deleting the question, or by not sending the email at all. Alternatively, the sender might want to modifying the email and asking the recipient to confirm the pre-existing answer (thus adding useful confirmation of and possibly expansion of the topic in the database). As the database builds up this will result in considerable efficiency benefits. When the potential recipients of questions are external consultants substantial saving in expert fees can result.

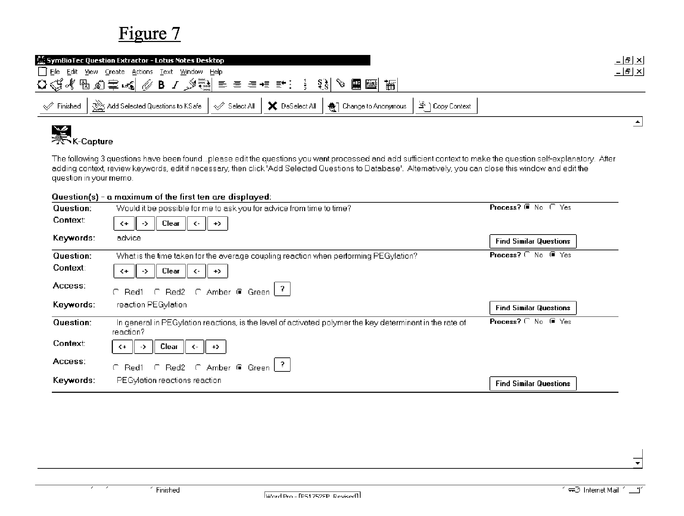

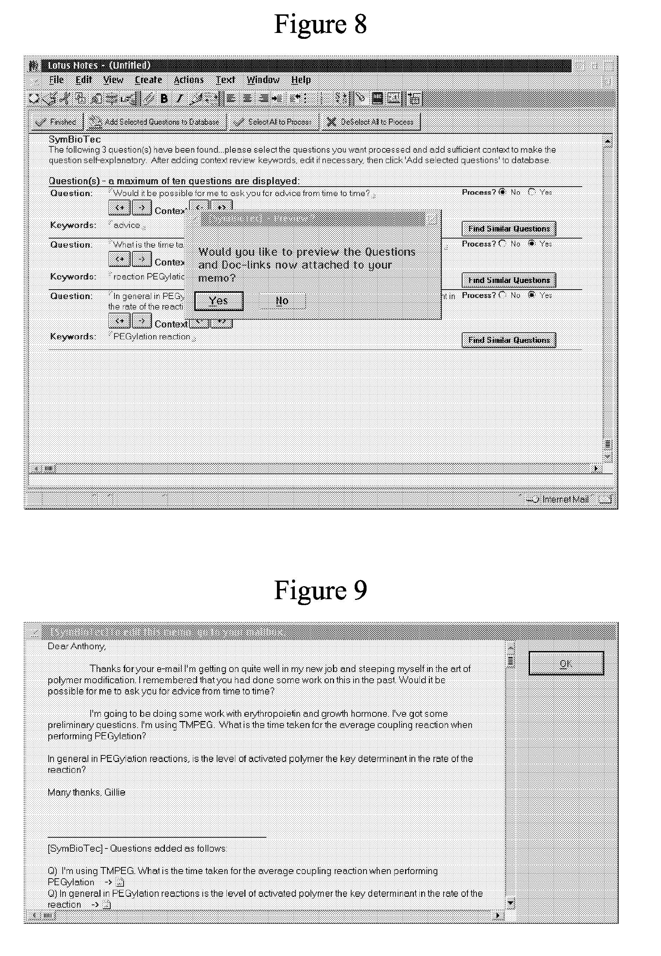

If no satisfactory answer was found in the database, then the sender sends his original unanswered question to the database by selecting which questions to process. Optionally, the question extractor screen displays an entry system with which the user can set access control codes as shown in Figure 7. Having set the codes the user clicks the "Add Selected Questions to Database", this generates a confirmation screen (not shown) and when the user gives confirmation the selected questions are added to the database. In addition, the outgoing email is provided with clickable links to the database. Each clickable link connects directly to the entry in the database which holds the question and which has a field to which the answer will eventually be added. The sender is offered the option of previewing the questions and links added to the email, as shown in Figure 8. The result is shown in Figure 9. The email is then sent to the expert addressed in the email. If expert is not know to the user, the email can be routed to an appropriate expert on the basis of a system which matches question contents to the individual skill range of an expert in a panel of experts.

The recipient has several options. He/she can a) respond immediately and click the link on the incoming email and type in the answer without replying to the email per se; b) do as for 'a' but in addition send a brief email reply in response to the rest of the email and indicate the answer has been added to the database; c) reply later by composing a "reply with history" and click on the link in the history (while on-line) to enter the answer into the database; d) compose the answer off-line in a word processor then cut and paste the answer into the database by clicking on the link in the questioner's email when back on-line; e) Scan a document containing the answer, add it to a document database on the server and then enter a link to the document as the reply using a "copy as link" command.

When the original sender receives a "reply with history" it will contain the link to the question, which now has a corresponding answer in the database, so the answer can be found simply by activating this link. In an optional embodiment, email updates may be supplied at regular intervals informing questioners when answers become available.

The questions and answers in the database can also be browsed by logging into the server and using questioning, keyword searches or full text searches.

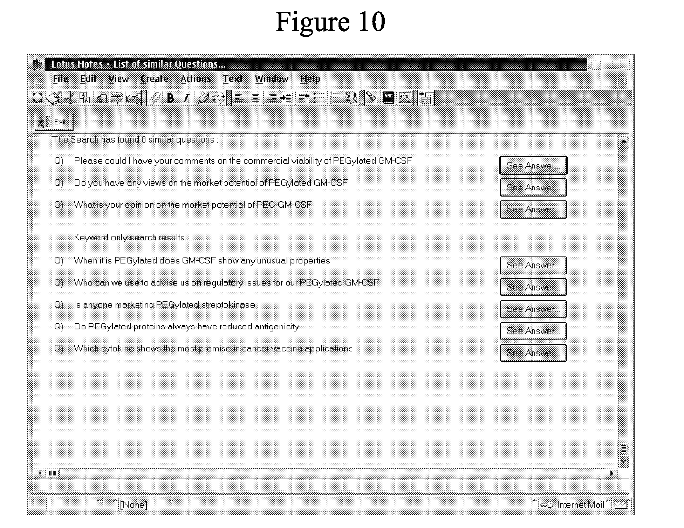

Figures 10 to 13 show further examples of question sorting.

In Figure 10, four of the first five questions all share the keywords "PEGylated" and "GM-CSF". However, the engine correctly discriminates between the first three questions which, although phrased differently, are qualitatively the same question and fundamentally different to the following five questions. The answer to any of the first three questions will be the same, as they are fundamentally the same question, merely phrased in a different way.

It will also be noted that the questions about PEGylated streptokinase and PEGylated proteins only contain one of the two keywords. These questions are therefore correctly given a lower ranking than the two questions above them. The number of matching keywords up to 100% match determines the position in the list from top to a predetermined cut off. The last question contains neither of the keywords but has been retrieved because one or more of the keywords are present in the answer to the question.

Inclusion of the "keyword only" search result adds an extra dimension to the search in that it provides a selection of questions which may also be of interest to the enquirer and it may provide for the rare instances when the question sorting engine fails to identify qualitative similarities between questions due to bizarre or unusual phrasing, typographical errors and the like.

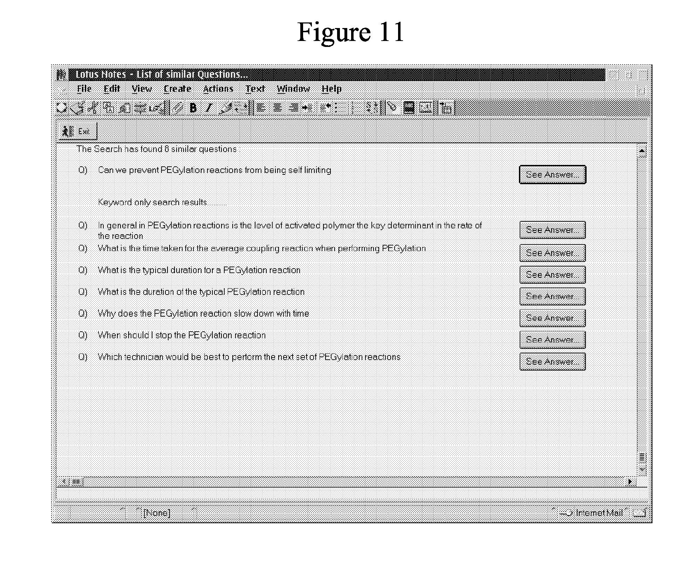

Figure 11 shows another example, in which a retrieved question is correctly shown to be qualitatively different from the other 7, all of which contain the keywords "PEGylation" and "reaction" or "reactions". The benefit of including keyword only searches is evident in this case because the answer to the question "Why does the PEGylation reaction slow down with time?" may contain information relevant to the question actually asked, even though it is qualitatively different.

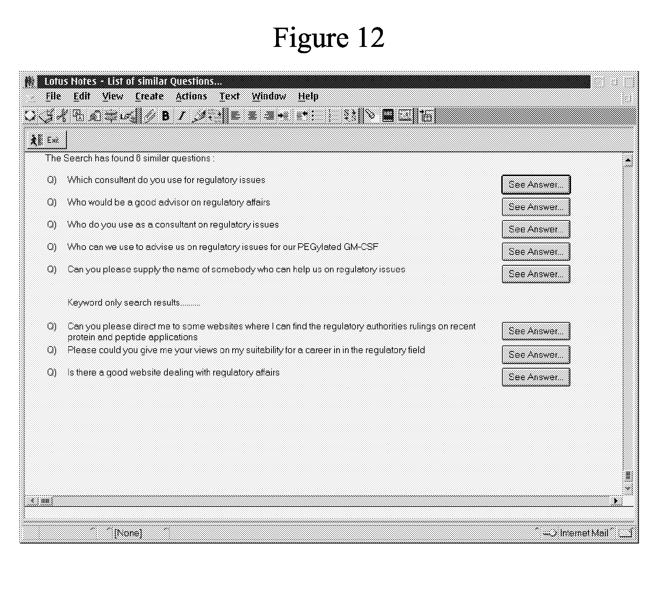

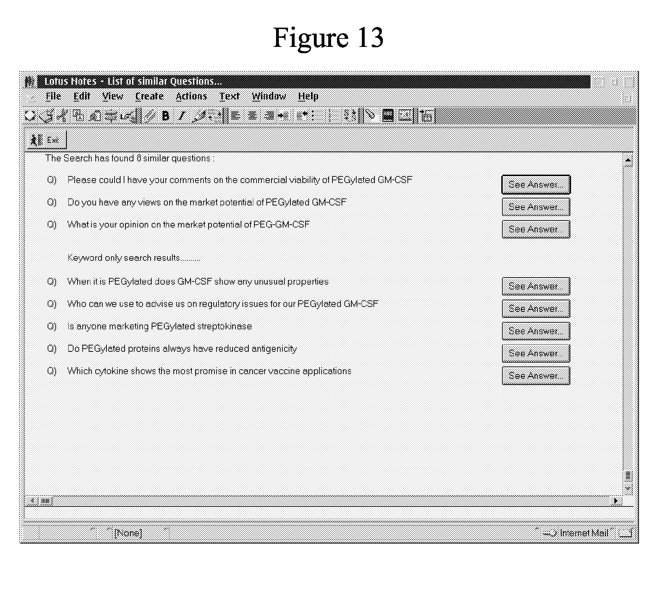

Figures 12 and 13 give further examples of the success of the question sorting engine in identifying qualitatively similar questions. All of the first five questions of Figure 12 are essentially asking for a recommendation about selection of a person who has expertise in regulatory matters. Figure 13 shows an example in which requests for views regarding the commercial potential of PEGylated GM-CSF have been correctly discriminated from other questions relating to PEGylated GM-CSF.

It is possible for the system to find reference documents within a document management system which themselves supply answers to questions, so that some entries in the database contain links to documents rather than (or as well as) direct answers.

When filling the document management database with useful documents which have not yet been requested and which are not thus associated with a question, the depositor is asked to supply sample questions to which the document being deposited contains the answer. Optionally, the text of the document associated with any question is restricted so that keyword searching applies only to the section of the document containing the answer and not the remainder of the whole document.

It may be desirable for people examining answers to identify who has answered a particular question. This may help to assess how reliable the answer is likely to be. Where the access codes permit, the identity of the answerer is included with the question and answer pair in the database and a link may also be provided to a short biography of the expert in question or the web site of the relevant consultancy. The date of the composition of the answer may also be displayed. Similarly, it may be desirable for people examining question and answer pairs to identify who has asked a particular question and/or when the question was asked. Generally, therefore, when the question is added to the database the questioner's identity and the date the question was asked are added to the database. Optionally, the system provides the questioner with the option to ask their question anonymously.

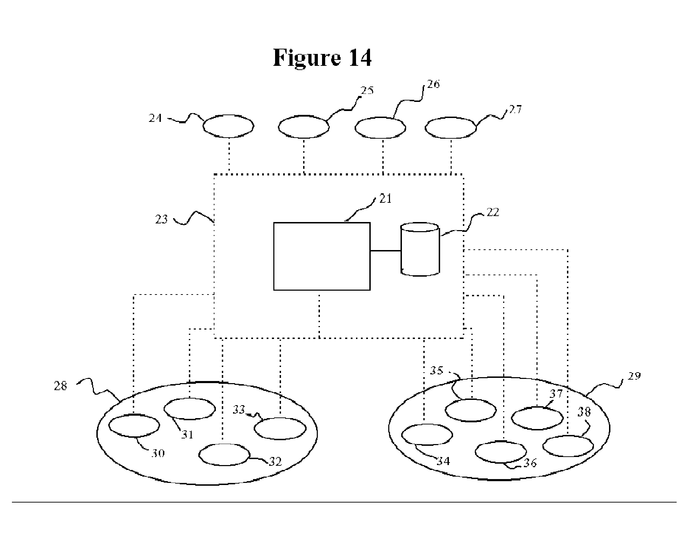

Figure 14 is a schematic diagram of a possible use of the system by a vertically integrated knowledge management company 21 which has a secure data storage system 22 on which to hold one or more knowledge databases and which includes databases kept up to date by the processes described above. Company 21 is connected to its clients and service providers via a network 23 (either the internet, or a private network, or virtual private network operating over the Internet). The service providers and individual experts (24-27) have a contractual arrangement with company 21 for the provision of advice in return for remuneration. Company 21 organises its clients into different consortia (28 and 29) which contain carefully selected companies 30-33 and 34-38 respectively. By agreement with the participating companies Company 21 selects the composition of each consortium so that they contain companies with complementary skills (to give the members access to a broader skill base than that present within any individual company) and so that there are no directly competing companies within each consortium. Company 21 operates sufficient consortia like 28 and 29 to accommodate all its client companies and individual clients.

One benefit of the present proposal is that it allows Company 21 to motivate the client companies to share the maximum amount of information. Company 21 does this by varying the tariff for answering questions depending on which access code the user selects for each question and answer pair. The higher the exclusivity level selected, the higher the cost of the service. For example, when an employee of Company 30 asks a question of Expert 24 and sets a "green" access code for the question and answer pair in the database, the latter may be shared by all users of the network shown on Figure 14 and Company 30 incurs a cost in the lowest band charged by Expert 24. The cost of each answer Expert 24 provides may be additionally scaled depending on the time she spends on answering the question, but will be discounted to reflect the access code set by the questioner. When an employee of Company 30 asks a question that she wishes to conceal from a competing Company, 35, she sets an "amber" access code, and the software restricts access to the question and answer pair to only the companies in Consortium 28. Company 30 in this instance incurs a cost in the middle band charged by Expert 24. However when an employee of Company 30 asks a highly sensitive question that she either wants to keep confidential to herself, or only to permit access to employees within her own company, she sets a "red" access code. Then Company 30 incurs a cost in the top band charged by Expert 24.

Another benefit of the present proposal is that it allows individuals within a company to use the system for corporate knowledge capture, thus motivating Companies to encourage their employees to use the system. Over time, if all significant questions asked by staff are captured by the invention into a readily accessible form (which can be accessed simply by asking questions), much or all of the Company's wisdom will reside on database 22. Using the originator field of the question and answer pairs in the database, the system can release questions generated by workers in Company 30 and any answers provided to that company to be stored locally on a separate knowledge database (not shown in Figure 14). Questions answered by Company 30's own staff do not incur an Expert Fee but may incur an administration charge from Company 21.

The proposal has the further benefit that it allows Company 21's system to motivate individuals in, for example, Company 30, to use the scheme by offering individuals "knowledge protection" i.e. by allowing personal knowledge bases which contain all questions asked by an individual to be retained in a personalised database where the access code to the questions and their corresponding answers and Company 30's policy on employee's access permits retention. This facet of the proposal is important to solve the problem that scientific notebooks and other documents are the property of the employer, thus when an employee leaves a company, much of their every day expertise remains behind in notebooks and reports. Most of this information is not the highly confidential information about the employer's business, but everyday skills like what to when a particular machine has a certain problem, or what pitfalls occur when running a particular type of experiment. All "green" access coded question and answer pairs are not sensitive and thus the subset asked by an individual may be retained to form his or her personal knowledge base. Since Company 30 wants to protect its confidential (red coded) and semi-confidential (amber-coded) materials from falling into the hands of competitors they will probably not allow individuals to retain these items in personal databases. Nevertheless, the green coded items will still represent a significant advance on the inconvenience of losing all notes by leaving notebooks with the employer.

Yet another benefit of the proposal is that it provides a means to prevent the demotivating factor of embarrassment and "loss of face" amongst individuals who may be reticent about asking seemingly dumb questions. A facility is provided to allow the questioner to remain anonymous, where the software retains the questioners identity confidentially (for mail routing purposes), but does not add the questioners name to the electronic communication or the entry in database 23.

Experts 24-27, are motivated to use the system by the remuneration system of the invention. Experts 24-27 all have a limit to their earnings imposed by their daily or hourly charge out rates. They will frequently receive identical questions and although they might set up FAQ lists on a web site, these are labour intensive to set up, and without maintenance rapidly become out of date. They also do not cope with infrequently asked questions. Expert 24 negotiates an hourly rate with Company 21 who will pass on Expert 24's services to Company 21's clients. With the exception of "red" access coded questions, for all questions which can be accessed by more than the requesting company, Expert 24 will receive a lower "up-front" payment than for a "red" access coded question, but in addition will receive a royalty each time their answer is accessed. The proportion of payment which is provided "up front" is higher for "amber" than "green" access coded questions since the former have the most restricted audience.

To increase royalty earning power, any or all of Experts 24-27 may proactively deposit entries where they generate both question and answer. This enables them to populate database 22 with information they know to be widely sought.

As an additional service, Company 21 may take comprehensive reports from, say, expert service provider company 27 and provide questions to which various sections in the report provide the answers. These questions and the corresponding sections of the report (or the whole report with appropriate links between the question entries and the report entries) can be provided via database 22. This facet of the proposal can provide significant advantage to company 27, especially where the cost of the report is so high that it would be unlikely that companies 30-33 and 34-38 would purchase the report. By having the facility to sell the report in a piecemeal fashion and obtaining royalties for each time a question and the corresponding small portion of the report is accessed, significant extra revenue from existing reports can be gained.

## Claims

1. A method of assembling a knowledge database containing data sets, the method comprising the steps of:
extracting data blocks from a multiplicity of electronic communications originating from client terminals, using a set of predefined rules;
for each said communication, displaying the extracted data block(s) on a display of the originating client terminal and enabling the sender of the communication to select or deselect a data block using input means of the client terminal:
classifying each selected data block based upon the content of the data block:
entering the data blocks into the database together with their respective classifications; and
receiving associated data blocks corresponding to the entered data blocks, from client computer terminals belonging to recipients of the electronic communications, and entering the associated data blocks into the database,
wherein a partner for a data block may be found by classifying the data block, identifying data blocks contained in the database which have the same or a similar classification, and identifying the corresponding associated data blocks of the same set.

2. A method according to claim 1, wherein for a given electronic communication said step of extracting data blocks is carried out at the client terminal where the communication originates using a set of rules stored locally at the client terminal.

3. A method according to claim 1, wherein for a given electronic communication said step of extracting data blocks is carried out at a server coupled to a local network to which the originating client terminal is coupled, using a set of rules stored locally at the server.

4. A method according to claim 2 or 3 and comprising sending data blocks extracted from a communication, from a client terminal or local server to a database maintained at a central server.

5. A method according to claim 4 and comprising incorporating address information, identifying the location in the database of the data blocks associated with the extracted and selected data blocks, as clickable links in the electronic communication prior to sending the communication to the recipient.

6. A method according to any one of the preceding claims, wherein said step of classifying each data block based upon the content of the data block comprises determining the topic to which the data block relates.

7. A method according to any one of the preceding claims, wherein a sender is able to add context to the extracted data block(s) for entry into the database.

8. A method according to any one of the preceding claims, wherein the data blocks are classified based upon an analysis of words and phrases used in the data blocks and of their relative positions.

9. A method according to any one of the preceding claims, wherein the step of entering associated data blocks into the database comprises modifying electronic documents to include clickable links to the corresponding data blocks extracted and entered into the database, sending the communications to their respective recipients and enabling the recipients to enter the associated data blocks into the database by selecting the corresponding links to the database.

10. A method according to any one of the preceding claims and comprising allocating to each data block set an access code which defines who can access the set via the database.

11. A method according to any one of the preceding claims, wherein the electronic communications comprise emails, text messages, intranet memos and web based communications.

12. A method according to any one of the preceding claims, wherein the electronic communications comprise the output of a speech recognition system or systems.

13. A method according to any one of the preceding claims, wherein the step of entering associated data blocks into the database comprises sending the electronic communications to their respective recipients, receiving the replies of the recipients, and extracting data blocks from the replies.

14. A method according to any one of the preceding claims, wherein the data blocks comprise text, and the step of classifying each data block comprises identifying functionally synonymous words and phrases in the data block.

15. A method according to claim 14, further comprising the step of checking the synonymous words and synonymous phrases against a look-up table containing them singly or in combinations.

16. A method of assembling a knowledge database containing question and answer pairs, the method comprising the steps of:
extracting questions from a multiplicity of electronic communications originating from client terminals;
for each said communication, displaying the extracted question(s) on a display of the originating client terminal and enabling the sender of the communication to select or deselect a question(s) using input means of the client terminal:
classifying each selected question based upon the content of the question:
entering the questions into the database together with their respective classifications; and
receiving answers corresponding to the entered questions from client computer terminals belonging to recipients of the electronic communications, and entering the answers into the database,
wherein an answer to a question may be found by classifying the question, identifying questions contained in the database which have the same or a similar classification, and identifying the corresponding answers.

17. A method of providing information to a user from a knowledge database constructed according to any one of the preceding claims, the method comprising:
searching an electronic communication prepared by the user for questions:
searching the database for matching and/or similar questions;
providing identified matching and/or similar questions to the user together with links to the respective answers stored in the database.

18. A method according to claim 17 and comprising identifying keywords in the or each identified question, and identifying questions contained in the database which have the same or a similar classification and which contain some or all of the same keywords, or being associated with added context which contains some or all of the same keywords.

19. A method of building a knowledge database comprising question and answer pairs, the method comprising:
extracting questions from electronic communications;
comparing the extracted questions with questions in the database;
if the extracted questions do not have a functional match to any of the questions in the database, adding the questions to the database and forwarding them to the recipient of the electronic communication for him to answer; and
if the recipient of the electronic communication provides an answer to any of the questions added to the database, adding the answer to the database.

20. A method of operating a knowledge base, the knowledge base comprising a database containing question and answer pairs and being coupled to a communications network to which users and experts are also coupled, the method comprising:
extracting questions from electronic communications created by users;
determining whether or not answers to the extracted questions are present in the database;
if answers are present in the database, delivering the answers to the users and rewarding the providers of the answers;
sending the corresponding electronic communications to respective experts to provide answers, and adding these questions and answers to the database.

21. A method according to claim 20 and comprising allocating one of a set of access codes to each question and answer pair, an access code defining the accessibility of a question and answer pair to users.

22. A method according to claim 20 or 21 and comprising entering into the database charging information for experts providing answers, wherein an expert is rewarded based upon the charging information for that expert and the number of times answers provided by the expert are accessed by users.

23. A method of providing information from reports and other documents and comprising the steps of;
identifying sections of the report which answer specific questions;
entering those questions and the corresponding sections of the report into a database;
enabling a user to enter a question;
matching the question to a functionally synonymous question in database; and
presenting the relevant section of the report which contains the corresponding answer to the user.

24. A method according to claim 23, wherein the provider of the report is rewarded based upon the number of times users access sections of the report.
